# EUROPEAN PATENT SPECIFICATION

(11) **EP 3 450 688 B1**
(45) Date of publication and mention of the grant of the patent: **29.07.2020**
(21) Application number: 18191569.5
(22) Date of filing: 29.08.2018
(51) Int. Cl.: F01D 5/30

(54) **GAS TURBINE ENGINE AND METHOD FOR REDUCING BLADE OFF LOADS**
GASTURBINENTRIEBWERK UND VERFAHREN ZUR REDUZIERUNG DER SCHAUFELLASTEN
MOTEUR A TURBINE A GAZ ET PROCÉDÉ PERMETTANT DE RÉDUIRE LES CHARGES D'ARRÊT DE LAME

(30) Priority: 29.08.2017 US 201715689946
(43) Date of publication of application: 06.03.2019
(73) Proprietor: United Technologies Corporation, Farmington, CT 06032 (US)
(72) Inventor: HUSBAND, Jason, South Glastonbury, CT Connecticut 06073 (US); GLASPEY, James, Farmington, CT Connecticut 06032 (US)
(74) Representative: Dehns

(56) References cited:
- EP-A1- 3 163 016
- EP-A2- 1 312 756
- WO-A1-2014/137688
- US-A- 3 532 438
- US-A1- 2016 298 642

## Description

### TECHNICAL FIELD

Exemplary embodiments of the present disclosure are directed to fan hubs of gas turbine engines and more particularly a conical fan hub that reduces a blade off load.

### BACKGROUND

Gas turbine engines, such as turbofan gas turbine engines, typically include a core engine having a fan section, a compressor section, a combustor section and a turbine section. During operation, air is pressurized in the compressor section and mixed with fuel in the combustor section for generating hot combustion gases. The hot combustion gases flow through the turbine section which extracts energy from the hot combustion gases to power the compressor section and drive the fan section.

The core engine includes an engine casing structure that includes a fan containment case (FCC) and a fan case downstream from the FCC. The FCC and the fan case surround the fan section of the gas turbine engine and contain the fan section components in the event of a fan blade out event. A fan blade out event occurs where a fan blade of the fan section becomes dislodged from the fan section and strikes the FCC.

Accordingly, it is desirable to limit the mass of the blade in the event of a fan blade out event.

US 2016/298642 A1 discloses a fan for a small turbine engine having a reduced hub ratio but does not disclose the blades secured to a conical fan hub. WO 2014/137 688 A1, EP 3163016 A1 and EP 1312756 A2 disclose alternative means for attaching fan blades in gas turbine engines.

### BRIEF DESCRIPTION

Viewed from one aspect the present invention provides a gas turbine engine according to claim 1.

In addition to one or more of the features described above, or as an alternative to any of the foregoing embodiments, at least some of the plurality of attachment features are proximate to a forward leading edge of the conical hub.

In addition to one or more of the features described above, or as an alternative to any of the foregoing embodiments, wherein at least some of the plurality of attachment features are arranged in a plurality of rows on the outer circumferential surface of the conical hub.

In addition to one or more of the features described above, or as an alternative to any of the foregoing embodiments, wherein the outer circumferential surface of the conical hub has at least two different Gaussian curvatures.

In addition to one or more of the features described above, or as an alternative to any of the foregoing embodiments, wherein at least some of the plurality of attachment features are located proximate to a leading edge of the conical hub.

Viewed from another aspect the present invention provides a method of reducing blade off loads during a blade out event in a gas turbine engine according to claim 6.

In addition to one or more of the features described above, or as an alternative to any of the foregoing embodiments, wherein the outer circumferential surface of the conical hub has at least two different Gaussian curvatures.

### BRIEF DESCRIPTION OF THE DRAWINGS

The following descriptions should not be considered limiting in any way. With reference to the accompanying drawings, like elements are numbered alike:
FIG. 1 is a partial cross sectional view of a gas turbine engine;
FIG. 2 is a schematic illustration of a fan blade of the fan of the gas turbine engine;
FIG. 3 is an exploded view of a fan blade and a rotor or hub of the gas turbine engine;
FIG. 4 is a schematic illustration of a fan blade of the fan of the gas turbine engine secured to a conical hub;
FIG. 5 is a partial perspective view of a fan blade secured to the conical hub;
FIG. 6 is a perspective view of a conical hub described for explanatory purposes;
FIG. 7 is an end view of the conical hub illustrated in FIG. 6;
FIG. 8 is a partial perspective view of a conical hub and securement pins described for explanatory purposes;
FIG. 9 is a partial end view of a conical hub with illustrating securement ligaments of the fan blades;
FIG. 10 is a schematic view of an embodiment of the present disclosure;
FIG. 11 is a schematic illustration of a fan blade of the fan of the gas turbine engine secured to a conical hub in accordance with another embodiment of the present disclosure:
FIG. 12 is partial perspective cross-sectional view illustrating a hub in accordance with an alternative arrangement described for explanatory purposes;
FIG. 13 is a partial perspective cross-sectional view illustrating a hub in accordance with yet another alternative arrangement described for explanatory purposes.

### DETAILED DESCRIPTION

A detailed description of one or more embodiments of the disclosed apparatus and method are presented herein by way of exemplification and not limitation with reference to the Figures.

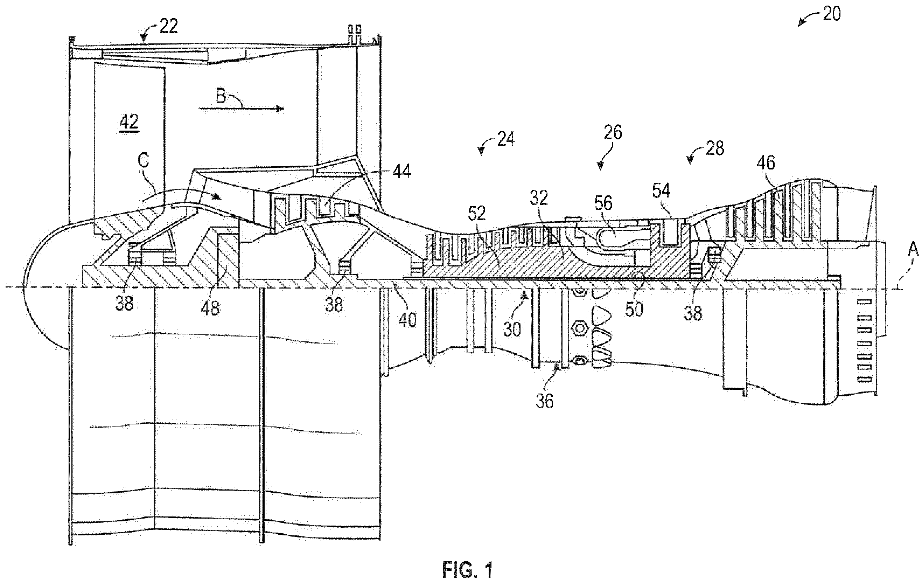

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8Mach and about 10,668 meters (35,000 feet). The flight condition of 0.8 Mach and 10,668 meters (35,000 feet), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 350.5 m/sec (1150 ft/second).

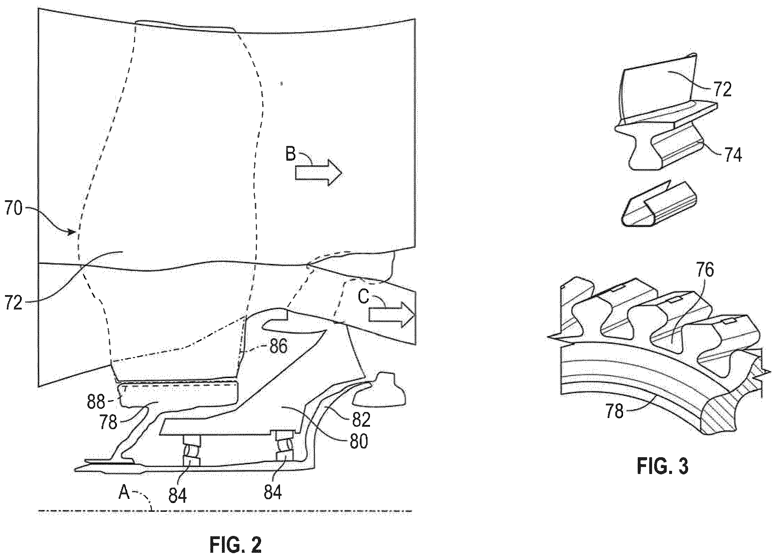

Referring now to FIGS. 2 and 3, a fan blade 70 of the fan 42 of the engine 20 is illustrated. As is known in the related arts, the fan 42 comprises a plurality of fan blades 70. The fan blade 70 also includes an airfoil 72 and a root or root portion 74. The root or root portion 74 is received within a slot or cavity 76 of a rotor, rotor disk, fan hub or hub 78 that rotates about axis A of the engine 20. Here root 74 is shown as a "dovetail" root.

Also illustrated in FIG. 2 is a portion of a static structure 80 the engine 20, a fan shaft 82 and roller bearings 84 located between the fan shaft 82 and the static structure 80. In one arrangement, the roller bearings 84 may be tapered roller bearings. Also illustrated in FIG. 2 is the bypass flow B and the core flow path C. A portion 86 of the fan blade 70, that is located below the flow paths B and C and at or above the blade to root interface may have a larger overall thickness due to structural requirements. This larger or thicker portion may create a containment issue in the event of a failure of the fan blade 70 due to an undesired operational event.

For a blade containment test under 14 CFR 33.94, the fan blade 70 is cut at the blade to dovetail interface represented by the dashed line 88. This releases at least portion 86 of the fan blade 70 into the illustrated flow paths B and C.

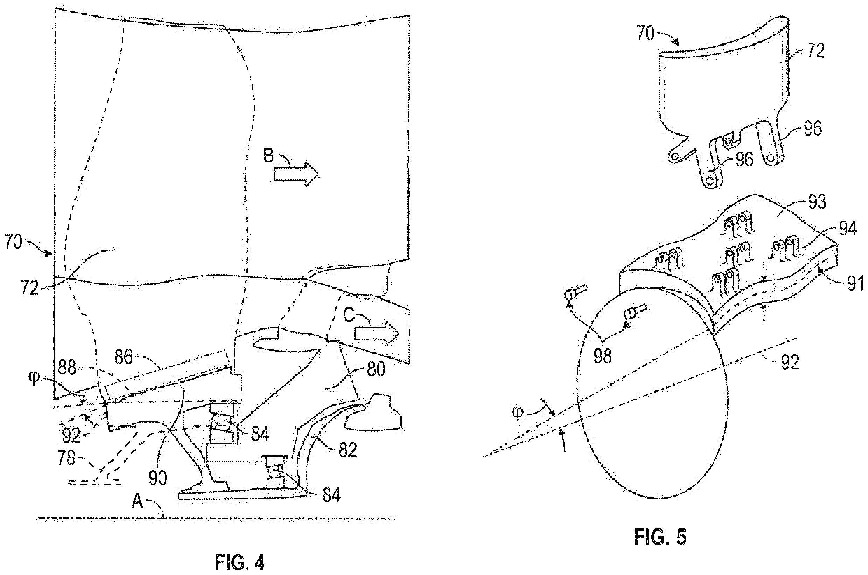

Referring now to FIGS. 4 and 5, a coned hub, coned fan hub or coned rotor 90 is illustrated. Here, a line 91 which extends along a midline of the coned hub (e.g., a mid point between an inner and outer surface of the coned fan hub or coned rotor 90 or an average of the inner and outer surfaces) has an angle ϕ with respect to line 92, which corresponds to line 88 in FIG. 2 (e.g., hub 78) or is parallel to the axis A of the engine 20. As illustrated herein, the angle ϕ varies as the midline 91 varies due to the curvature or undulation as well as the thickness of the coned hub or coned rotor 90. In one embodiment, the thickness of the coned hub or rotor 90 may vary. As discussed above, the midline 91 of the coned hub or coned rotor 90 rotates about axis A of the engine and angles upwardly in a radial direction with respect to axis A in a fore to aft direction as illustrated in the FIGS. As used herein and as illustrated in the FIGS. a fore part of the hub 90 is closer to the fan 42 than an aft part of the hub 90 or in other words and as viewed in the attached FIGS. fore to aft is left to right when viewing FIG. 1. For comparison purposes the hub 78 and its midline from FIGS. 2 and 3 is illustrated in FIG. 4 by dashed lines.

By providing a coned hub with a radially extending midline 91 and/or coned hub or rotor 90 as illustrated herein, the cut line 88 for use in a blade containment test under 14 CFR 33.94, allows portion 86 of the fan blade 70 to be significantly smaller, which benefits rotating imbalances as well as reducing the impact energy of a released blade into the fan containment case (FCC).

In addition and as also illustrated, the cone angle ϕ of the hub or rotor 90 allows reconfiguration of the static structure 80, the shaft 82 and thus the bearing 84 closest the hub 90 may be relocated to an area that results in improved rotor or hub dynamics.

In order to secure the fan blade 70 to the coned or conical hub 90, a plurality of attachment features 94 extend from a surface 93 and the fan blade is secured thereto by a plurality of ligaments or connecting members 96 which are secured to the fan blade 70 at one end and extend to the connecting member or members 96 at the other end.

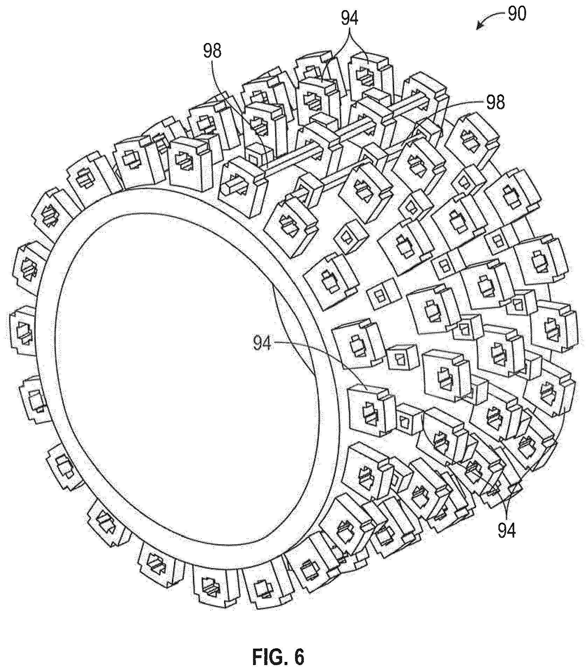

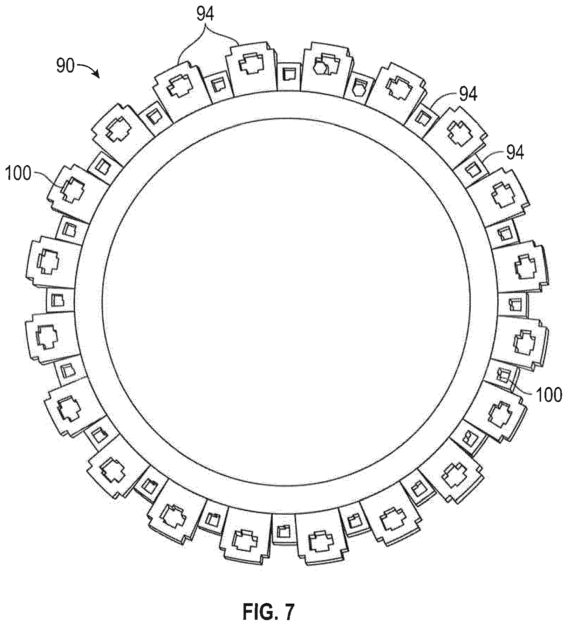

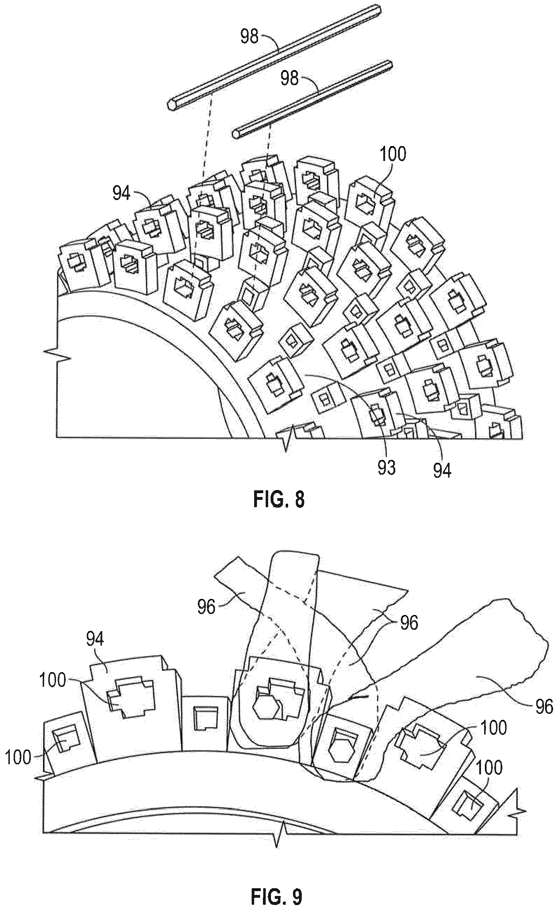

The ligaments or connecting members 96 are secured to the attachment features 94 by a pin or pins 98. In one arrangement, pins 98 may be press fit into its corresponding opening in order to secure the ligaments or connecting members 96 to the hub 90. Of course, alternative methods of securement are considered to be within the scope of the present disclosure. Still further and as illustrated in at least FIGS. 6-9, the coned or conical hub 90 and its surface 93, may have a plurality of attachment features 94 of varying sizes (e.g., height, width, length, etc.) and orientations each having an opening 100 configured to receive a portion of a pin 98. In addition and similar to the attachment features 94, the pins may also have varying sizes. \

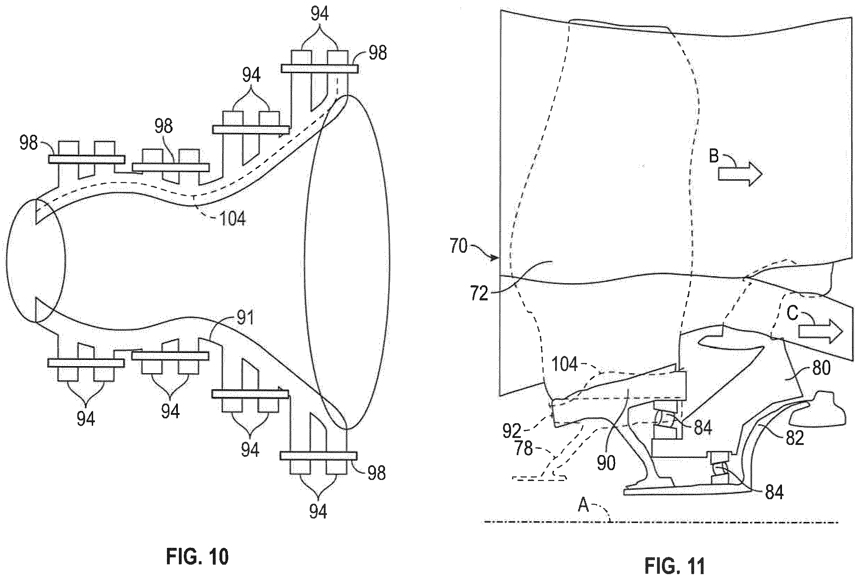

Referring now to FIG. 10, a more general pinned polynomial "conical" shaped hub 90 is illustrated. In this embodiment, the surface 93 of the conical hub may vary providing the undulating line 104 as illustrated in FIG. 10. This design or configuration allows the stiffness/strength of each fan blade ligament attachment to be designed independently as well as allowing for the implementation of more than one Gaussian curvature in the design. By designing at least some of the attachment features 94 independently the design is free from the constraints of a dove tail root configuration. In the dove tail root configuration, the design must have only one Gaussian curvature. In other words, if the design employs more than one Gaussian curvature the root will not be able to slide into the dovetail. However, the design illustrated in at least FIGS. 10 and 11, the Gaussian curvature may vary.

By varying the Gaussian curvature of the hub, the related blade design may also vary. As such, the hub and the blade securement thereto below the core flow path C can vary. This allows the blade attachment to be configured in order to account for centripetal forces or stresses encountered by the blade and/or areas of its securement to the hub.

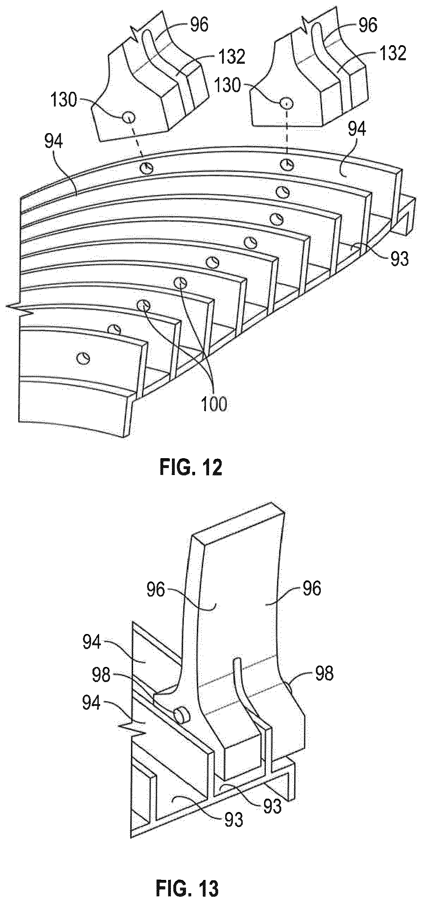

Referring now to FIGS. 12 and 13, another arrangement is illustrated. In this arrangement, the attachment features 94 of the rotor or hub 90 are continuous walls or attachment features that extend continuously about the periphery of the hub 90. In this arrangement, the attachment features or walls 94 are spaced from each other in an axial direction as represented by axis A. In addition, the continuous walls 94 may have varying heights extending in a radial direction away from axis A and away from the surface 93. In an embodiment, the surface 93 undulates and hub 90 may be conical in shape in a fore to aft direction.

In one non-limiting embodiment, the walls or attachment features 94 may be formed in the hub 90 via a lathing process. As such, the hub may be placed on a turning machine or lathe and a cutting tool is used to remove surface material in order to form the walls or attachment features 94.

As mentioned above and in one embodiment, the walls or attachment features 94 may extend continuously about the hub 90. In yet another embodiment, the walls or attachment features may extend partially about hub 90 (e.g., not completely around) or some of the walls or attachment features 94 may extend completely around and some may not.

As illustrated, the ligaments or connecting members 96 have an opening 130 for receipt of pin or member 98 therein. In addition, the ligaments or connecting members 96 may also have a slot or opening 132 in order to receive a portion of wall 94 therein. Accordingly and as the ligaments or connecting members 96 are placed on a portion of wall 94 a portion of the wall or feature 94 is received in slot or opening 132. Once opening 130 is aligned with opening 100 a pin or member 98 is inserted therein in order to secure the ligaments or connecting members 96 to the hub 90. In this embodiment, the ligaments or connecting members 96 will have a portion on either side of wall or feature 94.

In an alternative arrangement and as illustrated in at least FIGS. 12 and 13, the ligaments or connecting members 96 are located on opposite sides of wall or feature 94. In this arrangement a pair of ligaments or connecting members 96 are secured to opposite sides of wall or feature 94 via pin 98.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A gas turbine engine comprising:
a conical hub (90) for a fan (42) of the gas turbine engine (20);
a plurality of attachment features (94) located on an outer circumferential surface (93) of the conical hub (90), wherein at least some of the plurality attachment features (94) are axially aligned with each other and at least some of the plurality of attachment features (94) are off set from each other, and wherein each of the plurality of attachment features (94) have an opening (100) configured to receive a portion of a pin (98);
a plurality of blades (70) secured to the conical fan hub (90) via the plurality of attachment features (94), wherein the opening (100) of each of the plurality of attachment features (94) is configured to receive the portion of the pin (98) for securing the plurality of blades (70) to the conical fan hub (90); and
wherein the outer circumferential surface (93) of the conical hub (90) undulates and increases in diameter with respect to an axis of the conical hub (90) in a forward to aft direction of the conical hub (90) .

2. The gas turbine engine as in claim 1, wherein at least some of the plurality of attachment features (94) are located proximate to a forward leading edge of the conical hub (90).

3. The gas turbine engine as in claim 1 or 2, wherein at least some of the plurality of attachment features (94) are arranged in a plurality of rows on the outer circumferential surface (93) of the conical hub (90).

4. The gas turbine engine as in claim 1 or 2, wherein the plurality of attachment features (94) located on the outer circumferential surface (93) of the hub (90) are a plurality of walls (94) axially spaced from each other that extend continuously about the outer circumferential surface (93) of the hub (90).

5. The gas turbine engine as in any preceding claim, wherein the outer circumferential surface (93) of the conical hub (90) has at least two different Gaussian curvatures.

6. A method of reducing blade off loads during a blade out event in a gas turbine engine (20), comprising:
securing a plurality of blades (70) to a conical fan hub (90) of the engine (20) via a plurality of attachment features (94) located on an outer circumferential surface (93) of the conical hub (90), wherein at least some of the plurality attachment features (94) are axially aligned with each other and at least some of the plurality of attachment features (94) are off set from each other, and wherein each of the plurality of attachment features (94) have an opening (100) configured to receive a portion of a pin (98) for securing the plurality of blades (70) to the conical fan hub (90); and
wherein the outer circumferential surface (93) of the conical fan hub (90) undulates and increases in diameter with respect to an axis of the conical hub (90) in a forward to aft direction of the conical fan hub (90).

7. The method as in claim 6, wherein the outer circumferential surface (93) of the conical hub (90) has at least two different Gaussian curvatures.

## Patentansprüche

1. Gasturbinentriebwerk, umfassend:
eine konische Nabe (90) für einen Ventilator (42) des Gasturbinentriebwerks (20);
eine Vielzahl von Anbringungsmerkmalen (94), die sich an einer äußeren Umfangsfläche (93) der konischen Nabe (90) befinden, wobei zumindest einige der Vielzahl von Anbringungsmerkmalen (94) axial miteinander ausgerichtet sind und zumindest einige der Vielzahl von Anbringungsmerkmalen (94) zueinander versetzt sind und wobei jedes der Vielzahl von Anbringungsmerkmalen (94) eine Öffnung (100) aufweist, die konfiguriert ist, um einen Abschnitt eines Stiftes (98) aufzunehmen;
eine Vielzahl von Schaufeln (70), die über die Vielzahl von Anbringungsmerkmalen (94) an der konischen Ventilatornabe (90) befestigt sind, wobei die Öffnung (100) jedes der Vielzahl von Anbringungsmerkmalen (94) konfiguriert ist, um den Abschnitt des Stiftes (98) zum Befestigen der Vielzahl von Schaufeln (70) an der konischen Ventilatornabe (90) aufzunehmen; und
wobei sich die äußere Umfangsfläche (93) der konischen Nabe (90) in Bezug auf eine Achse der konischen Nabe (90) in einer Vorwärts-Rückwärts-Richtung der konischen Nabe (90) windet und deren Durchmesser in dieser Richtung zunimmt.

2. Gasturbinentriebwerk nach Anspruch 1, wobei sich zumindest einige der Vielzahl von Anbringungsmerkmalen (94) nahe einer Vorderkante der konischen Nabe (90) befinden.

3. Gasturbinentriebwerk nach Anspruch 1 oder 2, wobei zumindest einige der Vielzahl von Anbringungsmerkmalen (94) in einer Vielzahl von Reihen an der äußeren Umfangsfläche (93) der konischen Nabe (90) angeordnet sind.

4. Gasturbinentriebwerk nach Anspruch 1 oder 2, wobei es sich bei der Vielzahl von Anbringungsmerkmalen (94), die sich an der äußeren Umfangsfläche (93) der Narbe (90) befinden, um eine Vielzahl von Wänden (94) handelt, die axial voneinander beabstandet sind und sich kontinuierlich um die äußere Umfangsfläche (93) der Nabe (90) erstrecken.

5. Gasturbinentriebwerk nach einem der vorangehenden Ansprüche, wobei die äußere Umfangsfläche (93) der konischen Nabe (90) zwei verschiedene Gaußsche Krümmungen aufweist.

6. Verfahren zur Reduzierung der Schaufellasten während eines Blade-Out-Ereignisses in einem Gasturbinentriebwerk (20), umfassend:
Befestigen einer Vielzahl von Schaufeln (70) an einer konischen Ventilatornabe (90) des Triebwerks (20) über eine Vielzahl von Anbringungsmerkmalen (94), die sich an einer äußeren Umfangsfläche (93) der konischen Nabe (90) befinden, wobei zumindest einige der Vielzahl von Anbringungsmerkmalen (94) axial miteinander ausgerichtet sind und zumindest einige der Vielzahl von Anbringungsmerkmalen (94) zueinander versetzt sind und wobei jedes der Vielzahl von Anbringungsmerkmalen (94) eine Öffnung (100) aufweist, die konfiguriert ist, um einen Abschnitt eines Stiftes (98) zum Befestigen der Vielzahl von Schaufeln (70) an der konischen Ventilatornabe (90) aufzunehmen; und
wobei sich die äußere Umfangsfläche (93) der konischen Nabe (90) in Bezug auf eine Achse der konischen Nabe (90) in einer Vorwärts-Rückwärts-Richtung der konischen Nabe (90) windet und deren Durchmesser in dieser Richtung zunimmt.

7. Verfahren nach Anspruch 6, wobei die äußere Umfangsfläche (93) der konischen Nabe (90) zumindest zwei verschiedene Gaußsche Krümmungen aufweist.

## Revendications

1. Moteur à turbine à gaz comprenant :
un moyeu conique (90) pour une soufflante (42) du moteur à turbine à gaz (20) ;
une pluralité d'éléments de fixation (94) situés sur une surface circonférentielle extérieure (93) du moyeu conique (90), dans lequel au moins certains de la pluralité d'éléments de fixation (94) sont alignés axialement les uns avec les autres et au moins certains de la pluralité d'éléments de fixation (94) sont décalés les uns par rapport aux autres, et dans lequel chacun de la pluralité d'éléments de fixation (94) a une ouverture (100) configurée pour recevoir une partie d'une broche (98) ;
une pluralité de lames (70) fixées au moyeu de soufflante conique (90) par l'intermédiaire de la pluralité d'éléments de fixation (94), dans lequel l'ouverture (100) de chacun de la pluralité d'éléments de fixation (94) est configurée pour recevoir la partie de la broche (98) afin de fixer la pluralité de lames (70) au moyeu de soufflante conique (90) ; et
dans lequel la surface circonférentielle extérieure (93) du moyeu conique (90) ondule et augmente de diamètre par rapport à un axe du moyeu conique (90) dans une direction avant-arrière du moyeu conique (90).

2. Moteur à turbine à gaz selon la revendication 1, dans lequel au moins certains de la pluralité d'éléments de fixation (94) sont situés à proximité d'un bord d'attaque avant du moyeu conique (90).

3. Moteur à turbine à gaz selon la revendication 1 ou 2, dans lequel au moins certains de la pluralité d'éléments de fixation (94) sont disposés en une pluralité de rangées sur la surface circonférentielle extérieure (93) du moyeu conique (90) .

4. Moteur à turbine à gaz selon la revendication 1 ou 2, dans lequel la pluralité d'éléments de fixation (94) situés sur la surface circonférentielle extérieure (93) du moyeu (90) sont une pluralité de parois (94) espacées axialement les unes des autres qui s'étendent en continu sur la surface circonférentielle extérieure (93) du moyeu (90).

5. Moteur à turbine à gaz selon une quelconque revendication précédente, dans lequel la surface circonférentielle extérieure (93) du moyeu conique (90) a au moins deux courbures gaussiennes différentes.

6. Procédé permettant de réduire les charges d'arrêt de lame pendant un événement d'éclatement dans un moteur à turbine à gaz (20), comprenant :
la fixation d'une pluralité de lames (70) à un moyeu de soufflante conique (90) du moteur (20) par l'intermédiaire d'une pluralité d'éléments de fixation (94) situés sur une surface circonférentielle extérieure (93) du moyeu conique (90), dans lequel au moins certains de la pluralité d'éléments de fixation (94) sont alignés axialement les uns avec les autres et au moins certains de la pluralité d'éléments de fixation (94) sont décalés les uns par rapport aux autres, et dans lequel chacun de la pluralité d'éléments de fixation (94) a une ouverture (100) configurée pour recevoir une partie d'une broche (98) afin de fixer la pluralité de lames (70) au moyeu de soufflante conique (90) ; et
dans lequel la surface circonférentielle extérieure (93) du moyeu de soufflante conique (90) ondule et augmente de diamètre par rapport à un axe du moyeu conique (90) dans une direction avant-arrière du moyeu de soufflante conique (90).

7. Procédé selon la revendication 6, dans lequel la surface circonférentielle extérieure (93) du moyeu conique (90) a au moins deux courbures gaussiennes différentes.
